# FASCICULE DE BREVET EUROPEEN

(11) **EP 4 104 725 B1**
(45) Date de publication et mention de la délivrance du brevet: **11.02.2026**
(21) Numéro de dépôt: 22179732.7
(22) Date de dépôt: 17.06.2022
(51) Int. Cl.: A47J 43/044

(54) **APPAREIL ELECTROMENAGER DE PREPARATION CULINAIRE EQUIPE D'UN SYSTEME DE VERROUILLAGE OPTIMISE**
ELEKTROHAUSHALTSGERÄT ZUR ESSENSZUBEREITUNG, DAS MIT EINEM OPTIMIERTEN VERRIEGELUNGSSYSTEM AUSGESTATTET IST
HOUSEHOLD COOKING APPLIANCE PROVIDED WITH AN OPTIMISED LOCKING SYSTEM

(30) Priorité: 18.06.2021 FR 2106530
(43) Date de publication de la demande: 21.12.2022
(73) Titulaire: SEB S.A., 69130 Ecully (FR)
(72) Inventeur: LHOMME, Gilles, 69134 Ecully Cedex (FR); MORIN, Yoann, 69134 Ecully Cedex (FR); LEMERCIER, Michel, 69134 Ecully Cedex (FR)
(74) Mandataire: SEB Développement

(56) Documents cités:
- CN-U- 202 725 109
- DE-A1- 102016 216 099
- DE-B- 1 025 593
- US-A- 5 957 578

## Description

### Domaine technique

La présente invention concerne un appareil électroménager de préparation culinaire, une réalisation particulière d'un tel appareil consistant en un robot pâtissier.

Un tel appareil électroménager de préparation culinaire comprend une base sur laquelle est monté un récipient de réception des aliments à préparer, une tête munie d'une broche rotative qui reçoit un outil de travail, la tête pouvant être déplacée entre une première position permettant de plonger l'outil de travail dans le récipient et une seconde position permettant de dégager l'outil de travail du récipient.

L'invention porte tout particulièrement sur la conception d'un système de verrouillage de la tête vis-à-vis de la base dans la première position et, de préférence, également dans la seconde position, un objectif principal de l'invention étant de rendre l'appareil électroménager de préparation culinaire plus ergonomique.

### Etat de la technique

Il est connu de l'homme de métier diverses conceptions d'appareils électroménagers de préparation culinaire. Selon une de ces conceptions, l'appareil électroménager de préparation culinaire comprend une base conçue pour être posée sur un plan de cuisine ou de table voire sur un autre support, un récipient qui est apte à recevoir des aliments à préparer et qui est monté de manière amovible sur la base afin de permettre le retrait du récipient de la base, ce qui permet d'extraire dudit récipient la préparation culinaire obtenue et de laver ledit récipient après usage. Cet appareil électroménager de préparation culinaire comprend également une tête munie d'une broche rotative apte à recevoir un outil de travail, par exemple un outil malaxeur, un outil fouet ou un outil pétrin, la tête étant déplaçable vis-à-vis de la base entre une première position et une seconde position. Selon la première position, la broche rotative est placée au-dessus d'une ouverture du récipient, ce qui permet de plonger l'outil de travail - préalablement monté sur la broche rotative - dans le récipient disposé sur la base pour préparer les ingrédients alimentaires composant la préparation culinaire. Selon la seconde position, la broche rotative est dégagée du dessus de l'ouverture du récipient, ainsi que l'outil de travail en la présence de celui-ci sur ladite broche rotative, ce qui permet de retirer le récipient de la base ou de le repositionner sur celle-ci, voire également de visualiser la préparation culinaire dans le récipient et d'ajouter des ingrédients alimentaires sans être gêné par la tête. Cet appareil électroménager de préparation culinaire comprend aussi un système de verrouillage comprenant un organe de verrouillage mobile entre une position de blocage de la tête au moins dans la première position et une position de déblocage de la tête autorisant son déplacement au moins de la première position vers la seconde position. Ce système de verrouillage comprend également un organe de commande mobile entre une position relâchée selon laquelle l'organe de verrouillage peut revenir en position de blocage et une position activée selon laquelle l'organe de verrouillage est en position de déblocage.

De telles caractéristiques sont décrites dans le modèle d'utilité chinois CN202725109U. Selon cette mise en œuvre, l'accessibilité à l'organe de commande n'est pas aisée étant donné que cet organe de commande est placé sur une face arrière de la base, qui est opposée à la position du récipient. Cela impose soit de placer l'organe de commande à l'arrière si l'utilisateur veut avoir accès facilement au récipient et aux organes d'activation (bouton de validation, bouton de programmation ...) dudit appareil, soit de placer ledit appareil latéralement si l'utilisateur veut accéder plus facilement à l'organe de commande placé latéralement, auquel cas les organes d'activation peuvent être moins accessibles et visibles par l'utilisateur, et l'appareil occupe plus de place sur le linéaire du plan de travail. L'ergonomie de cet appareil est perfectible, ce qui est d'ailleurs le cas généralement pour les appareils de ce type actuellement présents sur le marché.

Un appareil selon les caractéristiques du préambule de la revendication 1 ou de la revendication 3 est connu du document DE1025593.

### Exposé de l'invention

L'invention a pour objectif de pallier ces inconvénients en proposant un appareil électroménager de préparation culinaire ergonomique, dont l'organe de commande est facilement accessible tout en positionnant convenablement ledit appareil face à soi durant son utilisation.

A cet effet, l'invention concerne un appareil électroménager de préparation culinaire selon les caractéristiques de la revendication 1 ou de la revendication 3.

L'utilisation d'un élément flexible gainé offre une grande liberté de positionnement tant de l'organe de commande que de l'organe de verrouillage, ce qui permet notamment de positionner aisément l'organe de commande sur une façade dudit appareil. Cela offre également une grande liberté de conception de la base et de la tête qui ne sont pas contraintes par le système de verrouillage à respecter des formes ou des positionnements bien définis.

Selon une réalisation de l'appareil électroménager de préparation culinaire objet de l'invention, l'élément flexible gainé comporte un câble monté coulissant dans une gaine assemblée avec la base. En d'autres termes, l'une des extrémités du câble est reliée à l'organe de commande tandis que l'autre extrémité du câble est reliée à l'organe de verrouillage, alors que les deux extrémités de la gaine sont fixées à la base. Cette mise en œuvre autorise de courber le câble et la gaine dans tous les sens pour adapter leur positionnement à l'intérieur de la base en fonction des positions de l'organe de verrouillage et de l'organe de commande, de la forme de la base et du cheminement possible du câble dans cette base, lequel dépend aussi des autres composants de l'appareil présents dans cette base. D'autres éléments flexibles gainés pourraient être envisagés, par exemple un ruban flexible monté coulissant dans une gaine assemblée avec la base.

Selon une réalisation préférentielle de l'appareil électroménager de préparation culinaire objet de l'invention, l'organe de verrouillage est mobile entre une position de blocage de la tête disposée dans l'une ou l'autre de la première position et de la seconde position, et une position de déblocage de la tête pour autoriser le déplacement de la tête de la première position vers la seconde position et, inversement, de la seconde position vers la première position. Ainsi, la tête est convenablement immobilisée dans sa première position durant son fonctionnement et aussi dans sa seconde position durant la manipulation du récipient vis-à-vis de la base ou l'ajout d'ingrédients dans le récipient en cours de préparation culinaire.

Selon une réalisation de l'appareil électroménager de préparation culinaire objet de l'invention, le système de verrouillage comprend un élément de rappel de l'organe de verrouillage en position de blocage lorsque la tête atteint au moins la première position, de préférence lorsque la tête atteint l'une ou l'autre de la première position et de la seconde position, et que l'organe de commande est relâché. Ainsi, le verrouillage s'effectue automatiquement lorsque la tête arrive en première position, de préférence également en seconde position, si l'organe de commande est relâché par l'utilisateur. L'élément de rappel peut notamment être formé par un ressort.

Selon une réalisation de l'appareil électroménager de préparation culinaire objet de l'invention, la tête est montée pivotante par rapport à la base pour passer de la première position à la seconde position et inversement. En variante de réalisation, la tête pourrait être montée en translation verticale vis-à-vis de la base pour son passage de la première position à la seconde position et inversement.

Selon une réalisation préférentielle de l'appareil électroménager de préparation culinaire objet de l'invention, la tête pivote d'avant en arrière par rapport à la base pour passer de la première position à la seconde position et inversement. Ainsi, l'utilisateur manipule la tête placée face à lui.

De préférence, selon cette réalisation, l'appareil électroménager de préparation culinaire comprend une façade décalée sur un des deux côtés latéraux de la tête, l'organe de commande étant agencé sur la façade. Ainsi, l'utilisateur peut manipuler aisément ledit appareil placé face à lui, en actionnant l'organe de commande avec une main et en pivotant la tête avec l'autre main. Cela permet également de placer sur cette façade des organes d'activation de l'appareil qui sont facilement accessibles et visualisables, par exemple un bouton pour valider des fonctions sélectionnées et un bouton ou un clavier de programmation.

Selon une réalisation de l'appareil électroménager de préparation culinaire objet de l'invention, l'organe de commande est constitué d'une manette montée à pivotement sur la base et assujettie à la première extrémité mobile de l'élément flexible gainé. D'autres organes de commande pourraient être envisagés dans le cadre de l'invention, par exemple une tirette montée en translation sur la base et assujettie à la première extrémité mobile de l'élément flexible gainé.

Selon une réalisation de l'appareil électroménager de préparation culinaire objet de l'invention, l'organe de verrouillage est formé par une tige de verrouillage déplacée par un levier monté en pivotement dans la base, le levier étant assujetti à la deuxième extrémité mobile de l'élément flexible gainé, le levier actionnant la tige de verrouillage de la position de blocage de la tête à la position de déblocage de la tête lors de l'activation de l'organe de commande. D'autres organes de verrouillage pourraient être envisagés dans le cadre de l'invention, par exemple un pêne relié à la deuxième extrémité mobile de l'élément flexible gainé et actionné en translation par une traction de la deuxième extrémité mobile de l'élément flexible gainé.

Selon une réalisation de l'organe de verrouillage, la tige de verrouillage comprend un axe longitudinal et est montée en rotation vis-à-vis de la base selon cet axe longitudinal, le levier étant assujetti à la tige de verrouillage et pivotant selon ledit axe lors d'une traction exercée par la deuxième extrémité mobile de l'élément flexible gainé. Cette mise en œuvre permet de réduire les efforts sur l'organe de commande lors de l'activation du système de verrouillage. D'autres variantes de réalisation pourraient être envisagées dans le cadre de l'invention, par exemple une tige de verrouillage montée en translation selon son axe longitudinal vis-à-vis de la base, le levier étant assujetti à la tige de verrouillage, le pivotement du levier engendré par une traction exercée par la deuxième extrémité mobile de l'élément flexible gainé permettant de déplacer en translation la tige de verrouillage.

De préférence, selon la réalisation précitée dans laquelle la tige de verrouillage est montée rotative, ladite tige de verrouillage comprend au moins un tronçon muni de deux méplats opposés mettant en œuvre une réduction d'épaisseur sur ledit au moins un tronçon de sorte à former un verrou plat d'épaisseur E1 et de longueur L1. En outre, la tête comprend au moins une lumière de largeur L2 supérieure à l'épaisseur E1 et inférieure à la longueur L1, au moins une des deux extrémités de la lumière se terminant par un premier orifice ou par un second orifice dans lequel vient se loger l'au moins un tronçon de la tige de verrouillage lorsque la tête est en première position, le pivotement de la tige de verrouillage en position de blocage permettant de positionner le verrou plat en équerre par rapport à l'extrémité de la lumière et le pivotement de la tige de verrouillage en position de déblocage permettant de positionner le verrou plat dans le prolongement de la lumière.

De préférence encore, ladite au moins une lumière a ses deux extrémités qui se terminent respectivement par le premier orifice et par le second orifice, le premier orifice réceptionnant ledit au moins un tronçon lorsque la tête est en première position et le second orifice réceptionnant ledit au moins un tronçon lorsque la tête est en seconde position, de sorte à bloquer la tête vis-à-vis de la base dans la première position et dans la seconde position.

De préférence, selon cette réalisation, la tige de verrouillage comprend deux tronçons formant chacun un verrou plat, la tête comprenant deux lumières parallèles ayant chacune une de leurs deux extrémités se terminant respectivement par le premier orifice et par le second orifice, les premiers orifices et les seconds orifices recevant respectivement les deux tronçons dans la première position de la tête et dans la seconde position de la tête.

Lorsque la tête est montée pivotante par rapport à la base, ladite au moins une lumière peut être de forme circulaire.

Selon l'invention, l'appareil électroménager de préparation culinaire comprend au moins une poulie sur laquelle est monté l'élément flexible gainé, de sorte à modifier le cheminement de l'élément flexible gainé tout en démultipliant les efforts transmis de l'organe de commande sur l'organe de verrouillage. Ainsi, la manipulation de l'organe de commande s'effectue avec un effort moindre lors de l'activation du système de verrouillage. Des variantes sont envisageables sans l'ajout de cette au moins une poulie.

### Brève description des figures

Les caractéristiques et avantages de l'invention apparaîtront à la lecture de la description suivante s'appuyant sur des figures, parmi lesquelles :
[Fig. 1] La figure 1 illustre une vue de face d'un mode préférentiel de réalisation de l'appareil électroménager de préparation culinaire selon l'invention ;
[Fig. 2] La figure 2 illustre une vue tridimensionnelle de l'appareil de la figure 1 ;
[Fig. 3] La figure 3 illustre un corps inférieur de la base sur lequel est montée une première réalisation du système de verrouillage sans poulie, et donc ne faisant pas partie du cadre de l'invention ;
[Fig. 4] La figure 4 illustre les éléments de la figure 3 selon un angle de vue opposé à ladite figure 3 ;
[Fig. 5] La figure 5 illustre la première réalisation du système de verrouillage mise en œuvre sur les figures 3 et 4 ;
[Fig. 6] La figure 6 illustre une tige de verrouillage du système de verrouillage de la figure 5 ;
[Fig. 7] La figure 7 illustre un levier du système de verrouillage de la figure 5 ;
[Fig. 8] La figure 8 illustre l'organe de commande monté sur une pièce de la base et raccordé avec la première extrémité mobile de l'élément flexible gainé, cette mise en œuvre étant envisageable avec diverses réalisations du système de verrouillage, dont la première réalisation précitée et la seconde réalisation qui suit ;
[Fig. 9] La figure 9 illustre une seconde réalisation du système de verrouillage sans poulie, et donc ne faisant pas partie du cadre de l'invention
[Fig. 10] La figure 10 illustre le corps inférieur de la base des figures 3 et 4, sur lequel est monté à pivotement un corps supérieur de la tête qui est représenté en position abaissée, selon laquelle la tête est dans la première position vis-à-vis de la base ;
[Fig. 11] La figure 11 illustre les éléments de la figure 10, avec le corps supérieur de la tête qui est représenté en position relevée, selon laquelle la tête est dans la seconde position vis-à-vis de la base ;
[Fig. 12] La figure 12 illustre la seconde réalisation du système de verrouillage de la figure 9, monté sur le corps supérieur de la tête ;
[Fig. 13] La figure 13 illustre notamment la présence de deux lumières circulaires sur le corps supérieur de la tête ;
[Fig. 14] La figure 14 illustre une vue en coupe de l'organe de commande monté sur la base et assemblé avec la première extrémité mobile de l'élément flexible gainé, selon une première variante sans poulie, et donc ne faisant pas partie du cadre de l'invention
[Fig. 15] La figure 15 illustre l'organe de commande monté sur une pièce de support de la base et raccordé avec la première extrémité mobile de l'élément flexible gainé, selon la réalisation de la figure 14 ;
[Fig. 16] La figure 16 illustre une vue en coupe de l'organe de commande monté sur la base et assemblé avec la première extrémité mobile de l'élément flexible gainé, selon une deuxième variante utilisant une poulie définissant l'invention;
[Fig. 17] La figure 17 illustre l'organe de commande monté sur une pièce de support de la base et raccordé avec la première extrémité mobile de l'élément flexible gainé, selon la réalisation de la figure 16 ;
[Fig. 18] La figure 18 schématise en vue de coupe transversale la tige de verrouillage de la figure 6 en position de blocage à l'intérieur d'une lumière sur la tête ;
[Fig. 19] La figure 19 schématise en vue de coupe transversale la tige de verrouillage de la figure 6 en position de déblocage à l'intérieur d'une lumière sur la tête ;
[Fig. 20] la figure 20 illustre une variante de la première réalisation du système de verrouillage de la figure 5.

### Description détaillée de l'invention

Dans la suite de la description, le terme appareil désigne l'appareil électroménager de préparation culinaire objet de l'invention, sauf indication dans le texte.

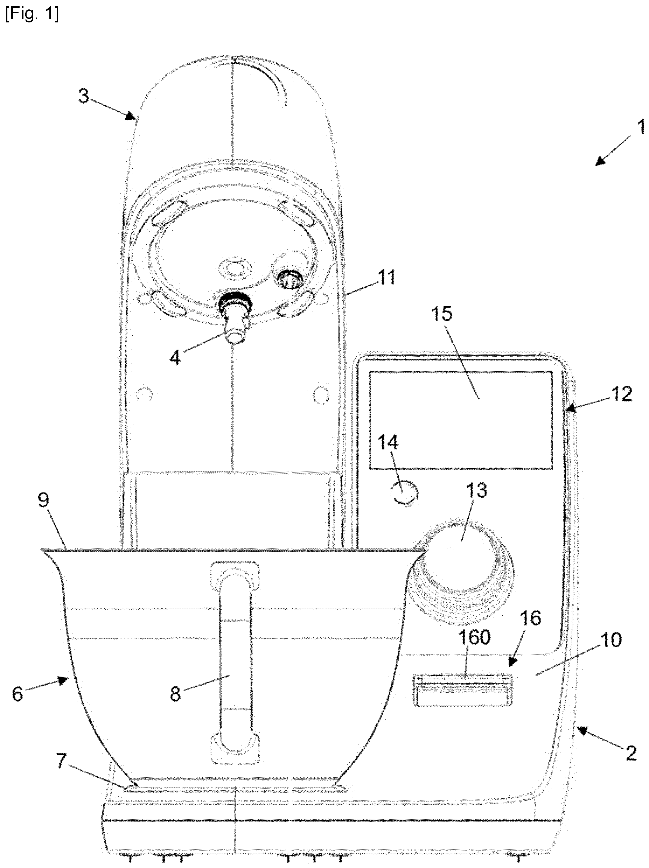

Les termes « supérieur », « inférieur », « haut », « bas », « avant », « arrière », « latéral », « vertical », « horizontal », qui pourraient être utilisés dans la présente description, le seront en considération de la position normale des éléments de l'appareil placé dans une configuration fonctionnelle, face à l'utilisateur sur une table ou un plan de cuisine ou de travail, tel qu'illustré en figure 1.

En outre, les mêmes références seront utilisées pour désigner les mêmes caractéristiques ou leurs équivalents, sauf indication dans le texte.

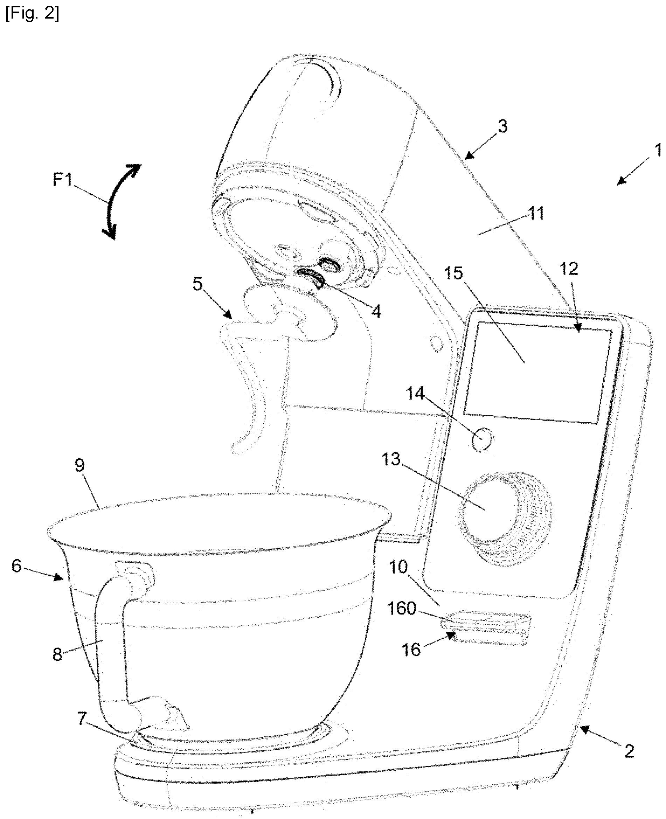

En regard des figures 1 et 2, l'appareil 1 comprend une base 2 et une tête 3. La tête 3 comprend une broche rotative 4 sur laquelle peut être montée de manière amovible un outil de travail 5. Sur la figure 2, cet outil de travail 5 est un outil pétrin, mais d'autres outils de travail peuvent être montés sur la broche rotative 4, par exemple un outil fouet ou un outil malaxeur. La base 2 reçoit de manière amovible un récipient 6, un socle 7 sur la base 2 étant prévu à cet effet. Le récipient 6 comprend une poignée 8 pour sa manipulation lors de son dégagement du socle 7. Le récipient 6 comprend également une ouverture 9 en partie supérieure, permettant d'y insérer les ingrédients alimentaires rentrant dans la composition de la préparation culinaire. En position normale d'utilisation, illustrée sur la figure 1, la tête 3 peut pivoter d'avant en arrière vis-à-vis de la base 2 selon le sens de la double-flèche F1 illustrée en figure 2. Dans une première position (non illustrée), la tête 3 est pivotée vers le bas en position abaissée vis-à-vis de la base 2, de sorte que la broche rotative 4 se trouve positionnée au-dessus de l'ouverture supérieure 9 du récipient 6, ce qui permet de plonger l'outil de travail 5 à l'intérieur du récipient 6 pour pétrir, fouetter ou malaxer les ingrédients alimentaires. Dans une seconde position illustrée en figures 1 et 2, la tête 3 est pivotée vers le haut en position relevée vis-à-vis de la base 2, de sorte que la broche rotative 4 et l'outil de travail 5 soient dégagés du récipient 6 afin de permettre son extraction du socle 7.

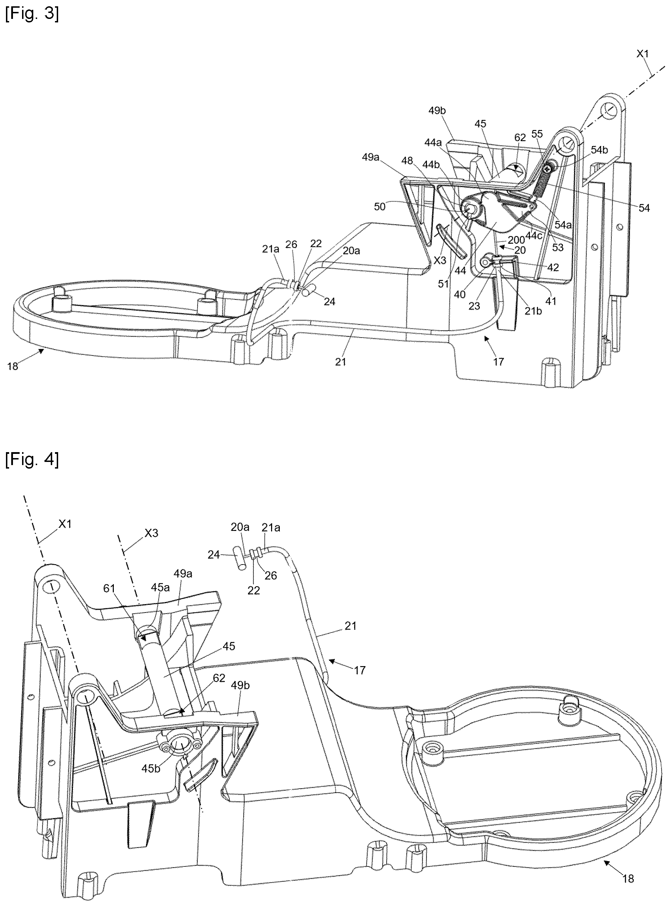

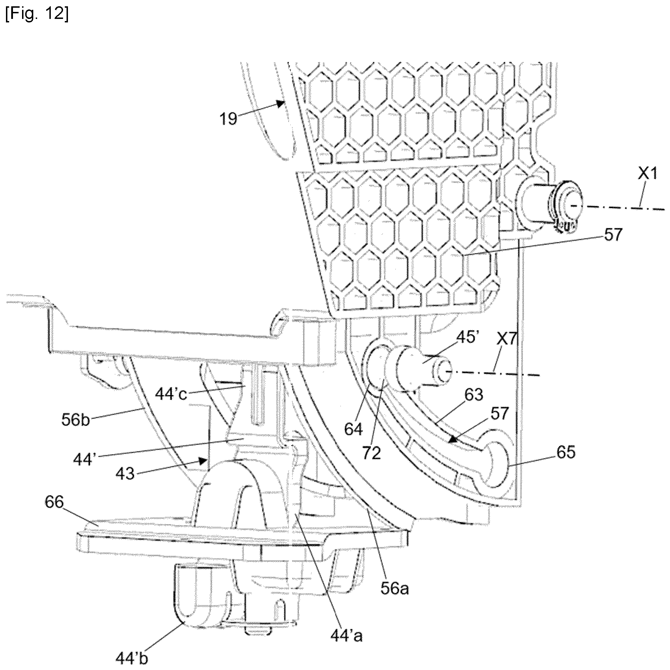

Comme l'illustrent les figures 1 et 2, la base 2 comprend une façade 10 qui est décalée sur un des côtés latéraux 11 de la tête 3. Cette façade 10 comprend un clavier 12 comprenant une molette 13 pour sélectionner des modes de fonctionnement de l'appareil 1 et un bouton 14 pour valider les fonctions sélectionnées, ainsi qu'un écran 15 permettant de visualiser des programmes, une minuterie, la vitesse de rotation de l'outil de travail 5, par exemple. Le bouton 14 et l'écran 15 peuvent aussi être tactiles, dans une variante de réalisation. Sur cette façade 10, en-dessous du clavier 12, est agencé un organe de commande 16 d'un système de verrouillage 17 qui est illustré en détail à l'appui des figures 3 à 17 selon deux variantes non limitatives, comme cela va être décrit ensuite. Sur ces deux variantes du système de verrouillage 17, l'organe de commande 16 est constitué d'une manette 160.

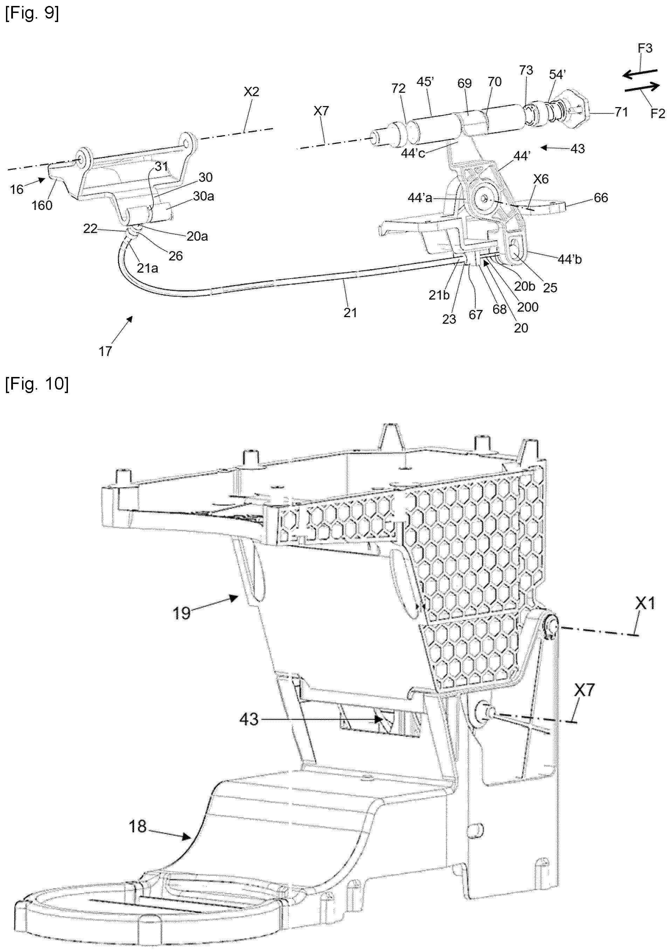

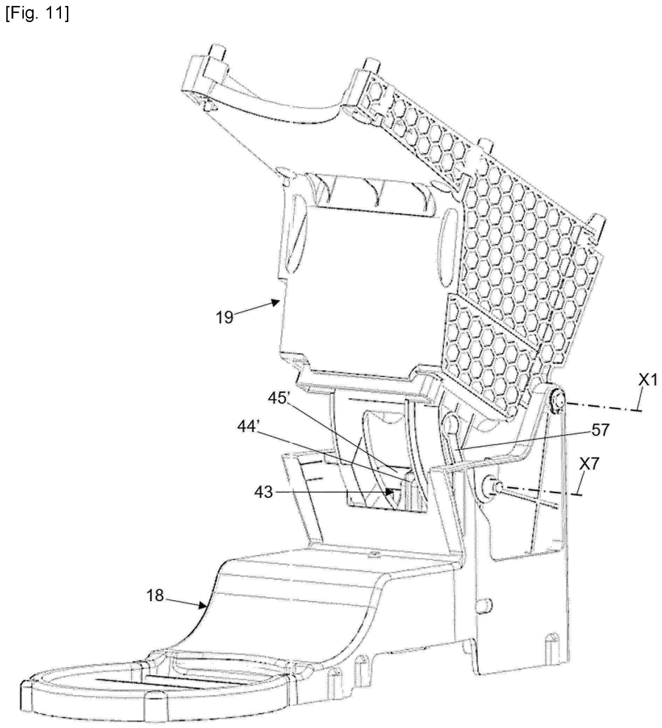

Les figures 10 et 11 montrent un corps inférieur 18 de la base 2 et un corps supérieur 19 de la tête 3, le corps inférieur 18 et le corps supérieur 19 étant montés en liaison pivot l'un par rapport à l'autre selon un axe de rotation X1 qui est positionné horizontalement et dans le sens transversal de l'appareil 1. La position illustrée en figure 10 correspond à la position abaissée de la tête 3 par rapport à la base 2 et la position illustrée en figure 11 correspond à la position relevée de la tête 3 par rapport à la base 2.

Le système de verrouillage 17 comprend un organe de verrouillage 43 configuré pour bloquer ou libérer la tête 3. Les figures 3 à 8 illustrent une première réalisation du système de verrouillage 17.

En regard des figures 3 à 5, le système de verrouillage 17 comprend un élément flexible gainé 20 configuré pour déplacer l'organe de verrouillage 17 sous l'action de l'organe de commande 16. L'élément flexible gainé 20 comprend une première extrémité mobile 20a et une deuxième extrémité mobile 20b. La première extrémité mobile 20a et la deuxième extrémité mobile 20b sont reliées entre elles par un élément flexible. L'élément flexible gainé 20 comprend une gaine 21 présentant une première extrémité de gaine 21a et une deuxième extrémité de gaine 21b. La première extrémité mobile 20a et la deuxième extrémité mobile 20b appartiennent à un élément flexible agencé dans la gaine 21. La première extrémité mobile 20a et la deuxième extrémité mobile 20b sortent de la gaine 21, respectivement par la première extrémité de gaine 21a et par la deuxième extrémité de gaine 21b. La première extrémité mobile 20a et la deuxième extrémité mobile 20b sont reliées entre elles par l'élément flexible, de sorte qu'un déplacement de la première extrémité mobile 20a par rapport à la gaine 21 entraine un déplacement de la deuxième extrémité mobile 20b par rapport à la gaine 21, et qu'un déplacement de la deuxième extrémité mobile 20b par rapport à la gaine 21 entraine un déplacement de la première extrémité mobile 20a par rapport à la gaine 21.

Selon un mode de réalisation préféré, l'élément flexible gainé 20 comporte un câble 200. Ainsi le câble 200 forme l'élément flexible. Le câble 200 est de préférence réalisé en acier inoxydable. Le câble 200 est monté coulissant à l'intérieur de la gaine 21. Le câble 200 et la gaine 21 sont flexibles. La gaine 21 comprend un premier embout d'arrêt 22 à la première extrémité de gaine 21a et un deuxième embout d'arrêt 23 à la deuxième extrémité de gaine 21b. Le câble 200 comprend à ses deux extrémités une première tête de câble 24 et une deuxième tête de câble 25.

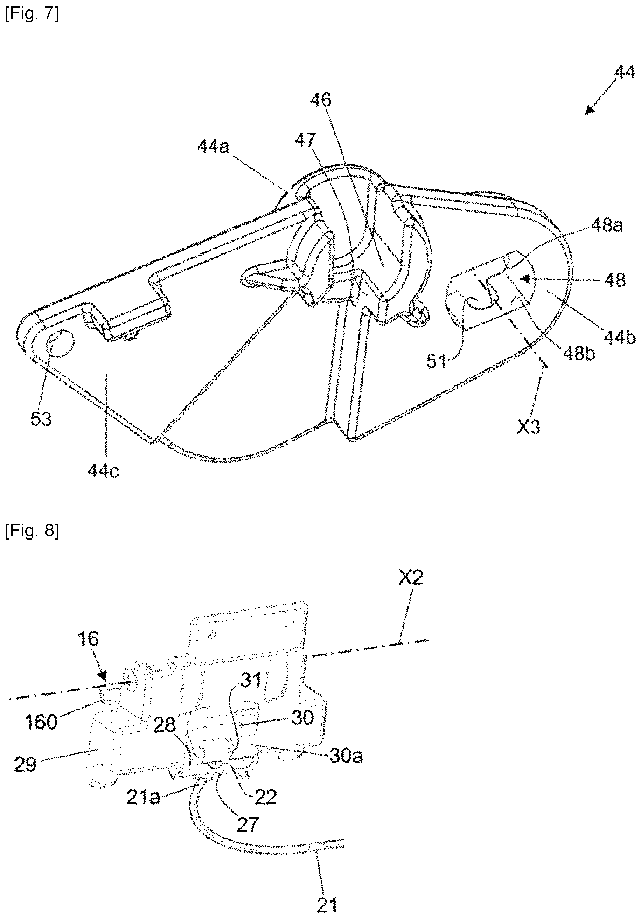

Tel que cela apparaît sur la figure 8, le premier embout d'arrêt 22 comprend une gorge 26, qui s'engage dans une encoche 27 agencée sur une paroi 28 d'une pièce de support 29 constituant un élément de la base 2. La manette 160 est montée en liaison pivot d'axe X2 vis-à-vis de cette pièce de support 29, l'axe X2 étant parallèle à l'axe X1. La manette 160 comprend une fourche 30 munie d'une extrémité recourbée 30a qui comporte une fente 31, cette extrémité recourbée 30a permettant la réception de la première tête de câble 24 en introduisant la première extrémité mobile 20a de l'élément flexible gainé 20 dans la fente 31, ce qui permet d'assujettir ladite première extrémité mobile 20a à ladite extrémité recourbée 30a. Ainsi la première extrémité mobile 20a est reliée à l'organe de commande 16. Une pression sur la manette 160 avec la main depuis la façade 10 de l'appareil 1 permet de faire pivoter ladite manette 160 selon l'axe X2, ce qui soulève la fourche 30 qui exerce une traction sur la première extrémité mobile 20a de l'élément flexible gainé 20, le câble 200 coulissant ainsi vis-à-vis de la gaine 21 dont la première extrémité de gaine 21a est fixée à la paroi 28 de la pièce de support 39.

En regard des figures 3 à 7, le deuxième embout d'arrêt 23 de la gaine 21 comprend une gorge 40 qui s'engage dans une encoche 41 agencée sur une patte de support 42 (figure 3) mise en œuvre sur le corps inférieur 18 de la base 2.

Selon la première réalisation du système de verrouillage représentée sur les figures 3 à 7, l'organe de verrouillage 43 comprend une tige de verrouillage 45 montée mobile en rotation dans la base 2. Plus particulièrement la tige de verrouillage 45 est montée mobile en rotation par rapport au corps inférieur 18. La tige de verrouillage 45 est déplacée par un levier 44 monté pivotant sur la base 2. Plus particulièrement le levier 44 est monté mobile en rotation par rapport au corps inférieur 18. Le levier 44 est actionné par l'élément flexible gainé 20. Le levier 44 comprend dans une partie centrale 44a une gouttière 46 comprenant une encoche 47 (figure 7) permettant la réception et le blocage de la deuxième tête de câble 25, ce qui permet d'assujettir la deuxième extrémité mobile 20b à ladite partie centrale 44a du levier 44. Ainsi la deuxième extrémité mobile 20b est reliée à l'organe de verrouillage 43. Une première partie d'extrémité 44b du levier 44 comprend un orifice 48 muni de deux méplats 48a, 48b (figure 7). Une première extrémité de tige 45a et une deuxième extrémité de tige 45b de la tige de verrouillage 45 sont montées en liaison pivot d'axe X3 vis-à-vis de deux flasques 49a, 49b respectives agencées sur le corps inférieur 18 de la base 2, l'axe X3 étant parallèle aux axes X1 et X2. La première extrémité de tige 45a est prolongée par un pion 50 qui comprend également deux méplats 50a, 50b et dont les dimensions sont adaptées à celles de l'orifice 48, ce qui permet d'engager ledit pion 50 dans ledit orifice 48 et de bloquer la rotation du levier 44 par rapport à la tige de verrouillage 45. Une rainure 51 débouchant sur l'orifice 48 dans la première partie d'extrémité 44b du levier 44 et un trou débouchant 52 sur le pion 50 de la tige de verrouillage 45 permettront de positionner une goupille (non illustrée) pour le blocage du pion 50 dans l'orifice 48 pour immobiliser complètement le levier 44 avec la tige de verrouillage 45.

Le système de verrouillage 17 comprend un élément de rappel de l'organe de verrouillage 43 en position de blocage lorsque la tête 3 atteint l'une ou l'autre de la première position et de la seconde position, et que l'organe de commande 16 est relâché.

A cet effet une deuxième partie d'extrémité 44c du levier 44 comprend un trou débouchant 53 qui reçoit une extrémité crochetée 54a d'un ressort 54 formant ledit élément de rappel (sur la figure 3, l'extrémité crochetée 54a n'est pas engagée dans le trou débouchant 53 pour une meilleure visualisation, mais elle le sera en réalité). Une autre extrémité 54b du ressort 54 est montée avec du jeu sur le corps inférieur 18 de la base 2 et maintenue sur le corps inférieur 18 au moyen d'une vis 55, le jeu autorisant une légère rotation du ressort 54 lorsqu'il est sollicité en traction par le levier 44 pivotant selon l'axe X3.

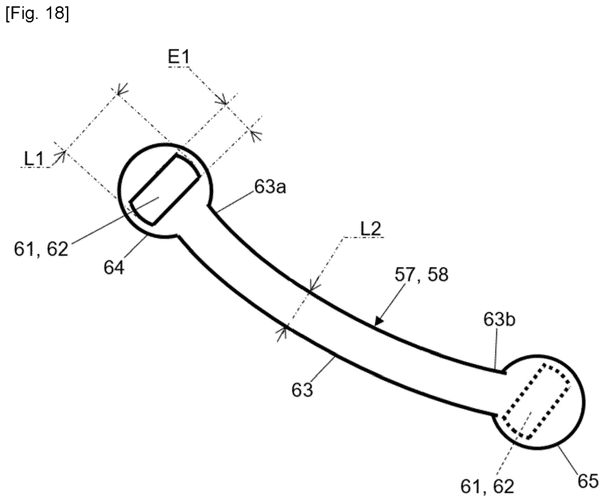

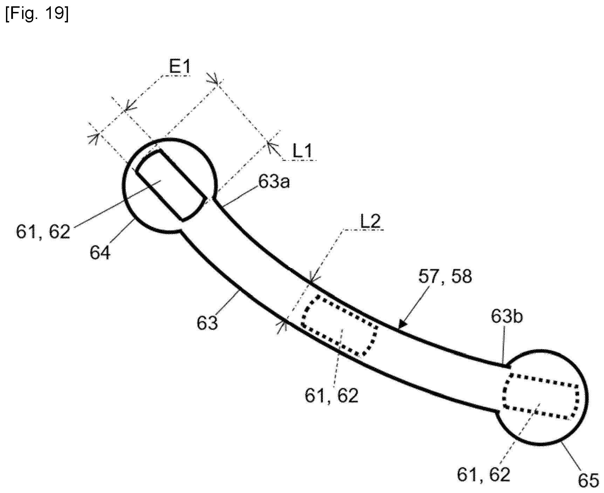

Lors d'une pression sur la manette 160 avec la main depuis la façade 10 de l'appareil 1, la traction exercée sur le câble 200 à la deuxième extrémité mobile 20b permet de tirer vers le bas sur la partie centrale 44a du levier 44 qui pivote alors selon l'axe X3 avec la tige de verrouillage 45, ladite tige de verrouillage 45 atteignant une position de déblocage schématisée en figure 19. Le pivotement vers le bas du levier 44 permet à sa deuxième partie d'extrémité 44c de tirer sur le ressort 54 qui exerce alors sur le levier 44 une force de rappel vers le haut. Lorsque la manette 160 est lâchée, la force de rappel du ressort 54 permet au levier 44 de pivoter vers le haut, ce qui fait également pivoter la tige de verrouillage 45 pour la ramener en position initiale, qui correspond à une position de blocage schématisée en figure 18. Ainsi la première extrémité mobile 20a reliée à l'organe de commande 16 et la deuxième extrémité mobile 20b reliée à l'organe de verrouillage 43 permettent de déplacer l'organe de verrouillage 43 vers sa position de déblocage lors de l'activation de l'organe de commande 16.

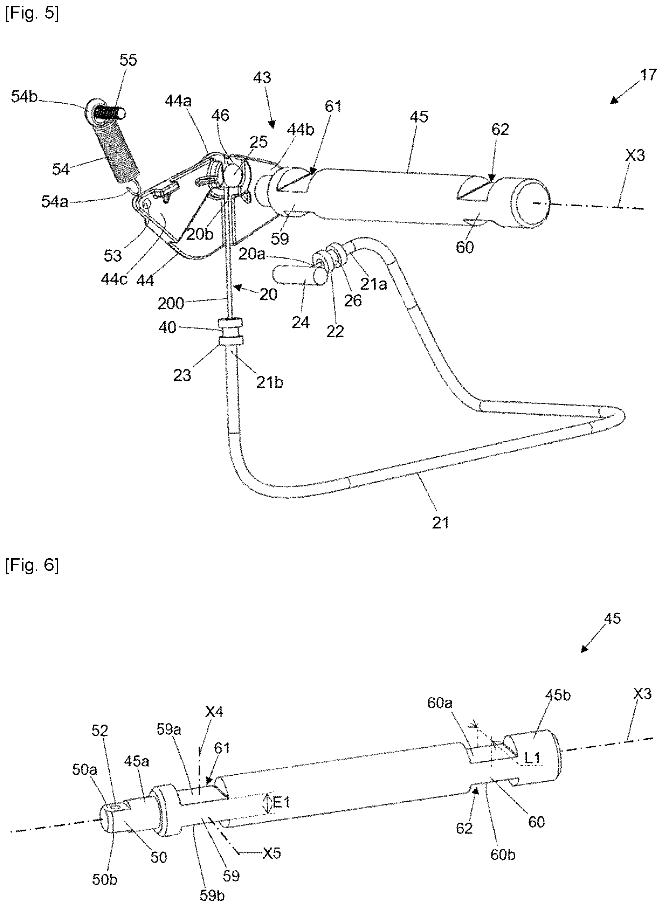

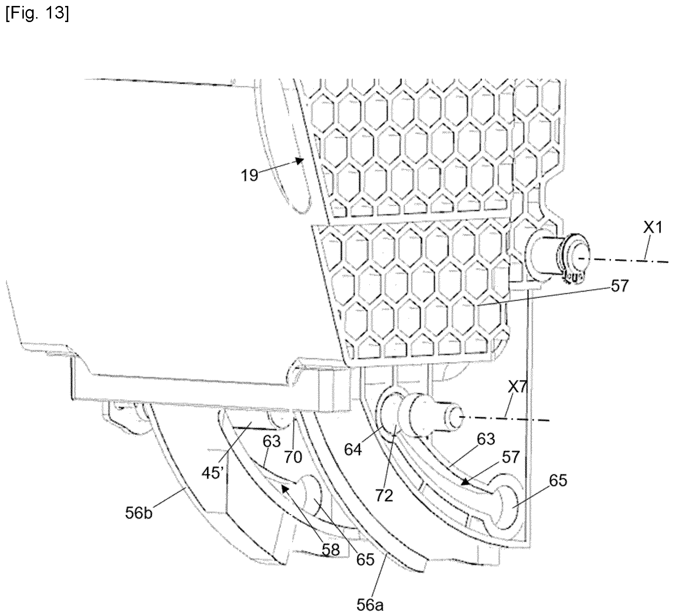

Tel qu'illustré sur la figure 13, le corps supérieur 19 de la tête 3 comprend deux flasques 56a, 56b, qui comprennent chacune une lumière 57, 58 ayant une forme circulaire, étant donné que la tête 3 pivote par rapport à la base 2 pour passer de la position abaissée à la position relevée, et inversement. Les deux lumières 57, 58 sont parallèles entre elles. La forme de ces lumières 57, 58 pourrait être linéaire, dans une variante prévoyant une translation - au lieu d'un pivotement - de la tête 3 par rapport à la base 2 pour passer de la position abaissée à la position relevée, et inversement. Tel qu'illustré sur les figures 3 à 6, la tige de verrouillage 45 comprend deux tronçons 59, 60 qui comprennent chacun deux méplats 59a, 59b, 60a, 60b qui permettent de réduire le diamètre de la tige de verrouillage 45 à une épaisseur E1 selon un premier sens défini par l'axe X4 (figure 6) et à une longueur L1 selon un second sens défini par l'axe X5 (figure 6) perpendiculaire aux axes X3 et X4, ladite longueur L1 correspondant au diamètre de la tige de verrouillage 45. Ces deux tronçons 59, 60 constituent deux verrous plats 61, 62.

Tel qu'illustré en regard des figures 13, 18 et 19, les lumières 57, 58 ont la forme d'une rainure 63 circulaire présentant une largeur L2 et dont une première extrémité de rainure 63a et une deuxième extrémité de rainure 63b se terminent respectivement par un premier orifice 64 et un second orifice 65, dont les diamètres sont identiques et légèrement supérieurs à celui de la tige de verrouillage 45. Lorsque la tête 3 est pivotée en position abaissée vis-à-vis de la base 2 et qu'aucune pression n'est exercée sur la manette 160, les verrous plats 61, 62 de la tige de verrouillage 45 se situent dans les premiers orifices 64 des lumières 57, 58 en équerre par rapport à la première extrémité de rainure 63a, comme illustré sur la figure 18. La longueur L1 des verrous plats 61, 62 étant supérieure à la largeur L2 des lumières 57, 58, la tige de verrouillage 45 reste bloquée dans lesdits premiers orifices 64, ce qui empêche de relever la tête 3 par rapport à la base 2. Lors d'une pression sur la manette 160, la tige de verrouillage 45 pivote vers le bas, comme expliqué précédemment, les verrous plats 61, 62 pivotant dans le sens de la première extrémité de rainure 63a, tel qu'illustré sur la figure 19. L'épaisseur E1 des verrous plats 61, 62 étant inférieur à la largeur L2 des lumières 57, 58, lesdits verrous plats 61, 62 peuvent se déplacer dans la rainure 63, ce qui autorise le pivotement vers le haut de la tête 3 dans la position relevée par rapport à la base 2. Lorsque les verrous plats 61, 62 atteignent les seconds orifices 65 des lumières 57, 58, soit lesdits verrous plats 61, 62 restent en position tel que schématisé en pointillés sur la figure 19 (dans le sens de la seconde extrémité de rainure 63b), si la manette 160 est maintenue enfoncée, soit les verrous plats 61, 62 pivotent dans la position illustrée en pointillés sur la figure 18, si la manette 160 est relâchée, sous l'action de la force de rappel exercée par le ressort 54, la tête 3 étant alors bloquée en position relevée vis-à-vis de la base 2 étant donné que les verrous plats 61, 62 sont en équerre par rapport à la seconde extrémité de rainure 63b. Le passage de la tête 3 de la position relevée à la position abaissée vis-à-vis de la base 2 s'effectue de manière inverse, toujours en pressant la manette 160 puis en la relâchant.

Les figures 9 à 13 décrivent une variante de conception de l'organe de verrouillage 43 du système de verrouillage 17, ledit système de verrouillage 17 comprenant, comme précédemment, une manette 160, un câble 200 monté coulissant dans une gaine 21. Selon cette variante de conception, l'organe de verrouillage 43 est une tige de verrouillage 45' montée mobile en translation dans la base 2, plus particulièrement montée mobile en translation par rapport au corps inférieur 18. La tige de verrouillage 45' est déplacée par un levier 44' monté pivotant sur la base 2, plus particulièrement monté mobile en rotation par rapport au corps inférieur 18. Le levier 44' est actionné par l'élément flexible gainé 20. Les assemblages de la première extrémité mobile 20a de l'élément flexible gainé 20 avec la manette 160 et de la première extrémité de gaine 21a avec la pièce de support 29 de la base 2 s'effectuent comme décrit précédemment à l'appui de la figure 8, laquelle s'applique aux deux variantes du système de verrouillage 17 décrites ici. Le levier 44' comprend une partie centrale 44'a qui est montée en liaison pivot vis-à-vis d'un élément de support 66 selon un axe X6 qui est perpendiculaire à l'axe X1 de pivotement de la tête 3 par rapport à la base 2. Cet élément de support 66 est assemblé au corps inférieur 18 de la base 2 à l'intérieur duquel ledit élément de support 66 est placé, ainsi que l'organe de verrouillage 43, comme le montrent les figures 10 et 11. Le levier 44' comprend une première partie d'extrémité 44'b conçue pour recevoir la deuxième tête de câble 25. La gorge 40 du deuxième embout d'arrêt 23 disposé à la deuxième extrémité de gaine 21b est engagée dans une encoche 67 agencée sur une patte 68 de l'élément de support 66. Une deuxième partie d'extrémité 44'c du levier 44' comprend un crochet 69 qui est engagé dans une première gorge 70 agencée sur la partie centrale de la tige de verrouillage 45', comme l'illustre la figure 9. La tige de verrouillage 45' est montée en translation selon un axe X7 parallèle à l'axe X1 (l'axe X7 correspond à l'axe X3 sur la première variante de l'organe de verrouillage 43) vis-à-vis des deux flasques 49a, 49b du corps inférieur 18 de la base 2. Lors d'une pression sur la manette 160, la deuxième extrémité mobile 20b tire sur la première partie d'extrémité 44'b du levier 44', ce qui fait pivoter le levier 44' selon l'axe X6 et permet à la deuxième partie d'extrémité 44'c dudit levier 44' de pousser la tige de verrouillage 45' dans le sens de la flèche F2. Lorsque la manette 160 est relâchée, un ressort 54', travaillant en compression entre une pièce 71 fixée au corps inférieur 18 de la base 2 et une portion d'extrémité 45'b de la tige de verrouillage 45', repousse ladite tige de verrouillage 45' dans le sens de la flèche F3. Le ressort 54' forme également un élément de rappel de l'organe de verrouillage 43 en position de blocage lorsque la tête 3 atteint l'une ou l'autre de la première position et de la seconde position, et que l'organe de commande 16 est relâché

Tel qu'illustré sur la figure 9, la tige de verrouillage 45' comprend deux secondes gorges 72, 73 dont l'écartement correspond à l'écartement des deux lumières 57, 58 sur les deux flasques 56a, 56b du corps supérieur 19 de la tête 3, ces deux lumières 57, 58 étant décrites précédemment pour la première variante. Les deux secondes gorges 72, 73 permettent une réduction de diamètre de la tige de verrouillage 45', cette réduction de diamètre étant dimensionnée pour permettre l'introduction desdites secondes gorges 72, 73 respectivement dans les rainures 63 des lumières 57, 58 lorsque celles-ci coïncident. Dans la position illustrée sur les figures 10, 12 et 13, la tête 3 est en position abaissée vis-à-vis de la base 2 et la manette 160 est lâchée ; la tige de verrouillage 45', qui présente un diamètre supérieur à la largeur L2 (représentée sur les figures 18 et 19) de la rainure 63 des lumières 57, 58, est placée dans les premiers orifices 64 desdites lumières 57, 58, ce qui bloque le pivotement du corps supérieur 19 de la tête 3 par rapport au corps inférieur 18 de la base 2 et, en conséquence, maintient la tête 3 en position abaissée par rapport à la base 2. Une pression sur la manette 160 permet de pousser la tige de verrouillage 45' dans le sens de la flèche F2 pour faire coïncider les gorges 72, 73 avec les lumières 57, 58 à l'intérieur des premiers orifices 64, ce qui autorise le pivotement du corps supérieur 19 de la tête 3 vis-à-vis du corps inférieur 18 de la base 2 pour passer ladite tête 3 en position relevée par rapport à la base 2. Les secondes gorges 72, 73 de la tige de verrouillage 45' peuvent donc coulisser dans les rainures 63 respectives des lumières 57, 58 pour venir se positionner dans les seconds orifices 65 desdites lumières 57, 58 lorsque la position relevée de la tête 3 est atteinte. Si la manette 160 est lâchée (ou a déjà été lâchée), le ressort 54' assure une translation de la tige de verrouillage 45' dans le sens de la flèche F3, ce qui décale les secondes gorges 72, 73 par rapport aux lumières 57, 58 et bloque ladite tige de verrouillage 45' dans lesdits seconds orifices 65, la tête 3 restant ainsi bloquée en position relevée par rapport à la base 2, tel qu'illustré en figure 11.

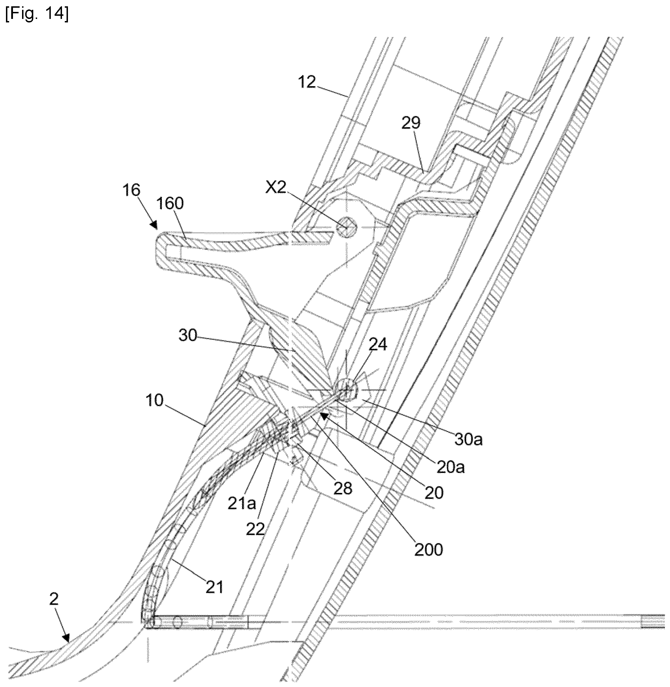

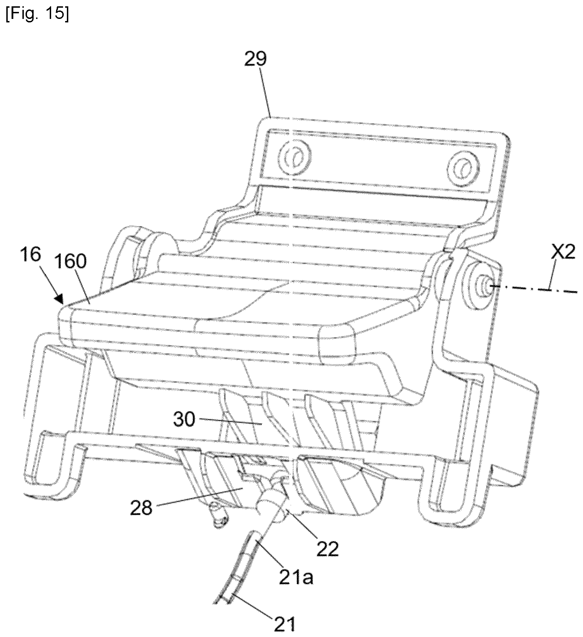

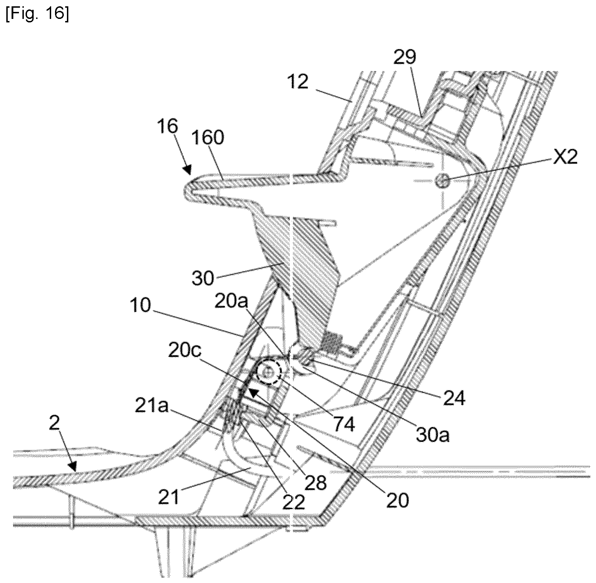

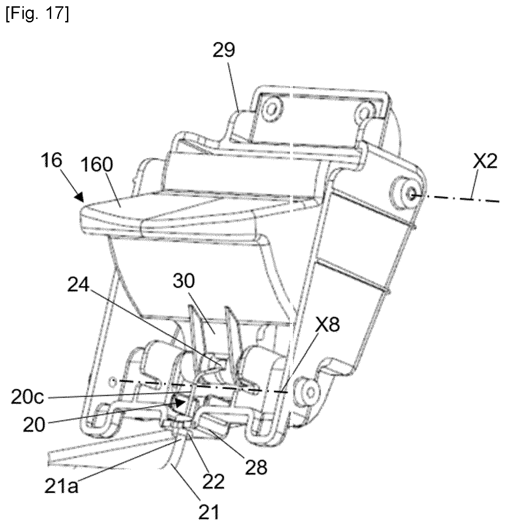

Les figures 14 à 17 présentent deux variantes de montage du câble 200 dans la base 2, au niveau de la manette 160. La variante des figures 14 et 15 correspond à ce qui était décrit précédemment en regard de la figure 8. Le premier embout d'arrêt 22 s'engage dans l'encoche 27 agencée sur la paroi 28 de la pièce de support 29 présente sur la base 2, la manette 160 étant montée en liaison pivot d'axe X2 vis-à-vis de cette pièce de support 29. La fourche 30 de la manette 160 a son extrémité recourbée 30a qui réceptionne la première tête de câble 24. Ainsi, la première extrémité mobile 20a de l'élément flexible gainé 20 est assujettie à l'extrémité recourbée 30a de la manette 160 et la première extrémité de gaine 21a est assemblée à la pièce de support 29 à l'intérieur de la base 2. Le câble 200 et la gaine 21 s'étendent à l'intérieur de la base 2 jusqu'à l'organe de verrouillage 43, la deuxième extrémité de gaine 21b étant assemblée avec le corps inférieur 18 de la base 2, comme expliqué précédemment. La gaine 21 pourra également être assemblée avec la base 2 en plusieurs endroits (non illustrés) pour maintenir convenablement la gaine 21 lorsqu'une traction sur le câble 200 est exercée par l'activation de la manette 160, en sorte d'éviter tout risque de déplacement et d'interférence du câble 200 et de la gaine 21 avec d'autres composants de l'appareil 1 positionnés dans ladite base 2. La variante des figures 16 et 17 définit l'invention et reprend les mêmes caractéristiques que précédemment et y ajoute une poulie 74 (schématisée en pointillés sur la figure 16) qui reçoit la portion 20c du câble 200 située entre le premier embout d'arrêt 22 et la première tête de câble 24. Cela permet de changer la trajectoire du câble 200 et de la gaine 21 à proximité de la manette 160, par exemple pour faciliter leur positionnement et aussi réduire leur rayon de courbure, mais aussi pour réduire l'effort de traction lorsqu'une pression est exercée sur la manette 160. Cette poulie 74 est montée pivotante selon un axe X8 vis-à-vis de deux flasques 75, 76 agencées sur la pièce de support 29 (poulie 74 non illustrée sur la figure 17). Cette poulie 74 peut être constituée d'un rouleau sur lequel vient en contact la portion d'extrémité 20c du câble 200, voire d'un galet présentant sur son contour une rainure en U ou en V dans laquelle vient se placer la portion 20c du câble 200. Une poulie similaire à la poulie 74 pourrait être envisagée au niveau de l'autre portion d'extrémité du câble 200 située entre le deuxième embout d'arrêt 23 de la gaine 21 et la deuxième tête de câble 25. La gaine 21 pourrait aussi être composée de plusieurs tronçons de gaine (non illustrés) afin de préserver des portions du câble 200 apparentes (non illustrées) et de positionner également des poulies au niveau de ces portions du câble 200 apparentes, notamment au niveau de changements de trajectoire du câble 200 à l'intérieur de la base 2.

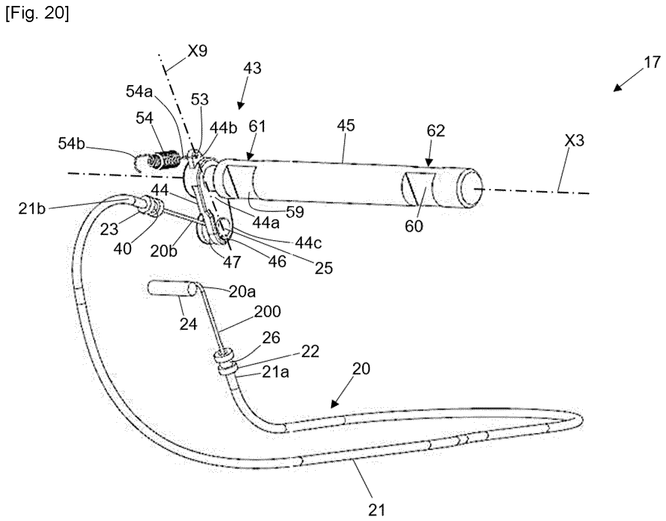

La variante de la première réalisation du système de verrouillage 17 illustrée en figure 20 comprend des caractéristiques similaires à la première réalisation du système de verrouillage 17 représentée sur les figures 3 à 7, les mêmes références étant par conséquent utilisées. Ainsi, comme précédemment, l'organe de verrouillage 43 comprend une tige de verrouillage 45 dont la première extrémité de tige 45a et la deuxième extrémité de tige 45b sont montées en liaison pivot d'axe X3 vis-à-vis de deux flasques 49a, 49b respectives agencées sur le corps inférieur 18 de la base 2 (le corps inférieur 18 est illustré sur les figures 3 et 4), ladite tige de verrouillage 45 étant assujettie à une partie centrale 44a d'un levier 44 monté mobile en rotation selon cet axe X3. Le levier 44 est actionné par l'élément flexible gainé 20 et comprend pour cela dans sa deuxième partie d'extrémité 44c une gouttière 46 comprenant une encoche 47 permettant la réception et le maintien de la deuxième tête de câble 25, ce qui permet d'assujettir la deuxième extrémité mobile 20b à ladite deuxième partie d'extrémité 44c du levier 44. La première partie d'extrémité 44b du levier 44 comprend un trou débouchant 53 qui reçoit une extrémité crochetée 54a d'un ressort 54, l'autre extrémité 54b dudit ressort 54 venant se fixer sur le corps inférieur 18 (fixation non illustrée). Comme l'illustre la figure 20, le trou débouchant 53 et la deuxième tête de câble 25 définissent un axe X9 qui est sécant à l'axe X3, le trou débouchant 53 étant plus proche de l'axe X3 que la deuxième tête de câble 25. Par exemple, la distance entre l'axe X3 et le trou débouchant 53 sera de l'ordre du tiers de la distance entre l'axe X3 et la deuxième tête de câble 25. Une traction sur le câble 200 permet à la deuxième tête de câble 25 de faire pivoter le levier 44 selon l'axe X3 et, par conséquent la tige de verrouillage 45, le pivotement du levier 44 exerçant une traction sur le ressort 54 ; lorsque le câble 200 est lâché, le ressort 54 fait pivoter en sens inverse le levier 44 selon l'axe X3. Cette variante de la première réalisation du système de verrouillage permet de réduire le bras de levier entre l'axe X3 et le point d'ancrage du ressort 54 et, au contraire, d'augmenter le bras de levier entre l'axe X3 et le point d'ancrage du câble 200, ce dernier étant plus important que le bras de levier entre l'axe X3 et le point d'ancrage du ressort 54. Ainsi, les efforts à exercer sur la manette 160 sont réduits sur cette variante de la première réalisation du système de verrouillage.

La description ne se limite pas aux réalisations décrites précédemment, d'autres variantes étant envisageables. Le câble 200 monté coulissant dans la gaine 21 pourrait être remplacé par un autre élément flexible, par exemple un ruban flexible. La matière du câble 200 pourrait aussi être autre que de l'acier inoxydable.

L'organe de verrouillage 43 pourrait aussi varier. Par exemple, on peut envisager un pêne (non illustré) monté en translation sur le corps inférieur 18 de la base 2 et une gâche (non illustrée) sur le corps supérieur 19 de la tête 3 pour assurer un verrouillage de la tête 3 vis-à-vis de la base 2 dans la position abaissée uniquement, le pivotement de la tête 3 pouvant être étudié - basculement vers l'arrière supérieur à 90 degrés - pour que cette tête 3 reste naturellement en position relevée vis-à-vis de la base 2 sous l'effet de la gravité. Le pêne sera assujetti à la deuxième extrémité mobile 20b, une pression sur la manette 160 permettant d'extraire le pêne de la gâche pour le déblocage de la tête 3 par rapport à la base 2, le pêne revenant en position sortie grâce à un ressort de rappel (non illustré) agencé au niveau dudit pêne, une fois la manette 160 lâchée. Le blocage de la tête 3 avec la base 2 se fera par encliquetage du pêne dans la gâche en exerçant une légère pression vers le bas sur la tête 3 en position abaissée.

La manette 160 pourrait être remplacée par un autre organe de commande 16, par exemple une tirette montée en translation sur la pièce de support 29 de la base 2 ou un bouton rotatif comprenant un rouleau sur lequel est monté la première tête de câble 24 et autour duquel s'enroulerait la portion 20c dudit câble 200 pour exercer une traction sur le levier 44, 44' et le faire pivoter afin de déplacer la tige de verrouillage 45, 45' en position de déblocage de la tête 3.

## Revendications

1. Appareil (1) électroménager de préparation culinaire, lequel comprend une base (2), un récipient (6) monté de manière amovible sur la base (2) et apte à recevoir des aliments à préparer, une tête (3) munie d'une broche rotative (4) apte à recevoir un outil de travail (5), la tête (3) étant déplaçable entre une première position selon laquelle la broche rotative (4) est placée au-dessus d'une ouverture (9) du récipient (6) disposé sur la base (2) et une seconde position selon laquelle la broche rotative (4) est dégagée du dessus de l'ouverture (9) du récipient (6), et un système de verrouillage (17) comprenant un organe de verrouillage (43), mobile entre une position de blocage de la tête (3) au moins dans la première position et une position de déblocage de la tête (3) autorisant son déplacement au moins de la première position vers la seconde position, et un organe de commande (16), mobile entre une position relâchée selon laquelle l'organe de verrouillage (43) peut revenir en position de blocage et une position activée selon laquelle l'organe de verrouillage est en position de déblocage, le système de verrouillage (17) comprenant un élément flexible gainé (20) présentant une première extrémité mobile (20a) reliée à l'organe de commande (16) et une deuxième extrémité mobile (20b) reliée à l'organe de verrouillage (43) pour déplacer l'organe de verrouillage (43) vers sa position de déblocage lors de l'activation de l'organe de commande (16), **caractérisé en ce qu'**il comprend au moins une poulie (74) sur laquelle est monté l'élément flexible gainé (20) de sorte à modifier le cheminement dudit élément flexible gainé (20) tout en démultipliant les efforts transmis de l'organe de commande (16) sur l'organe de verrouillage (43).

2. Appareil (1) électroménager de préparation culinaire selon la revendication 1, dans lequel l'élément flexible gainé (20) comporte un câble (200) monté coulissant dans une gaine (21) assemblée avec la base (2).

3. Appareil (1) électroménager de préparation culinaire, lequel comprend une base (2), un récipient (6) monté de manière amovible sur la base (2) et apte à recevoir des aliments à préparer, une tête (3) munie d'une broche rotative (4) apte à recevoir un outil de travail (5), la tête (3) étant déplaçable entre une première position selon laquelle la broche rotative (4) est placée au-dessus d'une ouverture (9) du récipient (6) disposé sur la base (2) et une seconde position selon laquelle la broche rotative (4) est dégagée du dessus de l'ouverture (9) du récipient (6), et un système de verrouillage (17) comprenant un organe de verrouillage (43), mobile entre une position de blocage de la tête (3) au moins dans la première position et une position de déblocage de la tête (3) autorisant son déplacement au moins de la première position vers la seconde position, et un organe de commande (16), mobile entre une position relâchée selon laquelle l'organe de verrouillage (43) peut revenir en position de blocage et une position activée selon laquelle l'organe de verrouillage est en position de déblocage, le système de verrouillage (17) comprenant un élément flexible gainé (20) présentant une première extrémité mobile (20a) reliée à l'organe de commande (16) et une deuxième extrémité mobile (20b) reliée à l'organe de verrouillage (43) pour déplacer l'organe de verrouillage (43) vers sa position de déblocage lors de l'activation de l'organe de commande (16), l'élément flexible gainé (20) comportant un câble (200) monté coulissant dans une gaine (21) assemblée avec la base (2), **caractérisé en ce qu'**il comprend une poulie (74) qui reçoit une portion (20c) du câble (200) située entre un premier embout d'arrêt (22) de la gaine (21) et une première tête de câble (24) du câble (200).

4. Appareil (1) électroménager de préparation culinaire selon l'une des revendications 1 à 3, dans lequel l'organe de verrouillage (43) est mobile entre une position de blocage de la tête (3) disposée dans l'une ou l'autre de la première position et de la seconde position, et une position de déblocage de la tête (3) pour autoriser le déplacement de la tête (3) de la première position vers la seconde position et, inversement, de la seconde position vers la première position.

5. Appareil (1) électroménager de préparation culinaire selon l'une des revendications 1 à 4, dans lequel le système de verrouillage (17) comprend un élément de rappel (54) de l'organe de verrouillage (43) en position de blocage lorsque la tête (3) atteint au moins la première position, de préférence lorsque la tête (3) atteint l'une ou l'autre de la première position et de la seconde position, et que l'organe de commande (16) est relâché.

6. Appareil (1) électroménager de préparation culinaire selon l'une des revendications 1 à 5, dans lequel la tête (3) est montée pivotante par rapport à la base (2) pour passer de la première position à la seconde position et inversement.

7. Appareil (1) électroménager de préparation culinaire selon la revendication 6, dans lequel la tête (3) pivote d'avant en arrière par rapport à la base (2) pour passer de la première position à la seconde position et inversement.

8. Appareil (1) électroménager de préparation culinaire selon la revendication 7, comprenant une façade (10) décalée sur un des deux côtés latéraux (11) de la tête (3), l'organe de commande (16) étant agencé sur la façade (10).

9. Appareil (1) électroménager de préparation culinaire selon l'une des revendications 1 à 8, dans lequel l'organe de commande (16) est constitué d'une manette (160) montée à pivotement sur la base (2) et assujettie à la première extrémité mobile (20a) de l'élément flexible gainé (20).

10. Appareil (1) électroménager de préparation culinaire selon l'une des revendications 1 à 9, dans lequel l'organe de verrouillage (43) est formé par une tige de verrouillage (45, 45') déplacée par un levier (44, 44') monté en pivotement dans la base (2), le levier (44, 44') étant assujetti à la deuxième extrémité mobile (20b) de l'élément flexible gainé (20), le levier (44, 44') actionnant la tige de verrouillage (45, 45') de la position de blocage de la tête (3) à la position de déblocage de la tête (3) lors de l'activation de l'organe de commande (16).

11. Appareil (1) électroménager de préparation culinaire selon la revendication 10, dans lequel la tige de verrouillage (45) comprend un axe (X3) longitudinal et est montée en rotation vis-à-vis de la base (2) selon cet axe (X3), le levier (44) étant assujetti à la tige de verrouillage (45) et pivotant selon ledit axe (X3) lors d'une traction exercée par la deuxième extrémité mobile (20b) de l'élément flexible gainé (20).

12. Appareil (1) électroménager de préparation culinaire selon la revendication 11, dans lequel la tige de verrouillage (45) comprend au moins un tronçon (59, 60) muni de deux méplats (59a, 59b, 60a, 60b) opposés mettant en œuvre une réduction d'épaisseur sur ledit au moins un tronçon (59, 60) de sorte à former un verrou plat (61, 62) d'épaisseur E1 et de longueur L1, la tête (3) comprenant au moins une lumière (57, 58) de largeur L2 supérieure à l'épaisseur E1 et inférieure à la longueur L1, au moins une des deux extrémités de la lumière (57, 58) se terminant par un premier orifice (64) ou par un second orifice (65), dans lequel vient se loger l'au moins un tronçon (59, 60) de la tige de verrouillage (45) lorsque la tête (3) est en première position, le pivotement de la tige de verrouillage (45) en position de blocage permettant de positionner le verrou plat (61, 62) en équerre par rapport à l'extrémité de la lumière (57, 58) et le pivotement de la tige de verrouillage (45) en position de déblocage permettant de positionner le verrou plat (61, 62) dans le prolongement de la lumière (57, 58).

13. Appareil (1) électroménager de préparation culinaire selon la revendication 12, dans lequel ladite au moins une lumière (57, 58) a ses deux extrémités qui se terminent respectivement par le premier orifice (64) et par le second orifice (65), le premier orifice (64) réceptionnant ledit au moins un tronçon (59, 60) lorsque la tête (3) est en première position et le second orifice (65) réceptionnant ledit au moins un tronçon (59, 60) lorsque la tête (3) est en seconde position, de sorte à bloquer la tête (3) vis-à-vis de la base (2) dans la première position et dans la seconde position.

14. Appareil (1) électroménager de préparation culinaire l'une des revendications 12 ou 13, dans lequel la tige de verrouillage (45) comprend deux tronçons (59, 60) formant chacun un verrou plat (61, 62), la tête (3) comprenant deux lumières (57, 58) parallèles ayant chacune une de leurs deux extrémités se terminant respectivement par le premier orifice (64) et par le second orifice (65), les premiers orifices (64) et les seconds orifices (65) recevant respectivement les deux tronçons (59, 60) dans la première position de la tête (3) et dans la seconde position de la tête (3).

15. Appareil (1) électroménager de préparation culinaire selon l'une des revendications 12 à 14 et l'une des revendications 6 à 8, dans lequel ladite au moins une lumière (57, 58) est de forme circulaire.

## Patentansprüche

1. Ein Haushaltsgerät zur kulinarischen Zubereitung (1), umfassend eine Basis (2), einen Behälter (6), der abnehmbar auf der Basis (2) montiert ist und geeignet ist, Nahrungsmittel aufzunehmen, die zubereitet werden sollen, einen Kopf (3) mit einer rotierenden Spindel (4), die geeignet ist, ein Arbeitswerkzeug (5) aufzunehmen, wobei der Kopf (3) zwischen einer ersten Position, in der die rotierende Spindel (4) über einer Öffnung (9) des auf der Basis (2) positionierten Behälters (6) platziert ist, und einer zweiten Position, in der die rotierende Spindel (4) von der Öffnung (9) des Behälters (6) entfernt ist, beweglich ist, und ein Verriegelungssystem (17), das ein Verriegelungsorgan (43) umfasst, das zwischen einer Verriegelungsposition des Kopfes (3) zumindest in der ersten Position und einer Entriegelungsposition des Kopfes (3), die seine Bewegung zumindest von der ersten Position zur zweiten Position erlaubt, beweglich ist, und ein Steuerorgan (16), das zwischen einer entspannten Position, in der das Verriegelungsorgan (43) in die Verriegelungsposition zurückkehren kann, und einer aktivierten Position, in der das Verriegelungsorgan in der Entriegelungsposition ist, beweglich ist, wobei das Verriegelungssystem (17) ein überzogene flexibles Element (20), das ein erstes bewegliches Ende (20a) mit dem Steuerorgan (16) und ein zweites bewegliches Ende (20b) mit dem Verriegelungsorgan (43) verbunden hat, um das Verriegelungsorgan (43) bei der Aktivierung des Steuerorgans (16) in seine Entriegelungsposition zu bringen, **gekennzeichnet dadurch, dass** es mindestens eine Rolle (74) umfasst, auf der das überzogene flexible Element (20) montiert ist, um den Weg des genannten überzogenen flexiblen Elements (20) zu ändern und gleichzeitig die von dem Steuerorgan (16) auf das Verriegelungsorgan (43) übertragenen Kräfte zu vervielfachen.

2. Das Haushaltsgerät zur kulinarischen Zubereitung (1) gemäß Anspruch 1, bei dem das überzogene flexible Element (20) ein Kabel (200) umfasst, das gleitend in einer Hülle (21) montiert ist, die mit der Basis (2) zusammengebaut ist.

3. Ein Haushaltsgerät zur kulinarischen Zubereitung (1), das eine Basis (2), einen Behälter (6), der abnehmbar auf der Basis (2) montiert ist und geeignet ist, Nahrungsmittel aufzunehmen, die zubereitet werden sollen, einen Kopf (3) mit einer rotierenden Spindel (4), die geeignet ist, ein Arbeitswerkzeug (5) aufzunehmen, wobei der Kopf (3) zwischen einer ersten Position, in der die rotierende Spindel (4) über einer Öffnung (9) des auf der Basis (2) positionierten Behälters (6) platziert ist, und einer zweiten Position, in der die rotierende Spindel (4) von der Öffnung (9) des Behälters (6) entfernt ist, beweglich ist, und ein Verriegelungssystem (17), das ein Verriegelungsorgan (43) umfasst, das zwischen einer Verriegelungsposition des Kopfes (3) zumindest in der ersten Position und einer Entriegelungsposition des Kopfes (3), die seine Bewegung zumindest von der ersten Position zur zweiten Position erlaubt, beweglich ist, und ein Steuerorgan (16), das zwischen einer entspannten Position, in der das Verriegelungsorgan (43) in die Verriegelungsposition zurückkehren kann, und einer aktivierten Position, in der das Verriegelungsorgan in der Entriegelungsposition ist, beweglich ist, wobei das Verriegelungssystem (17) ein überzogene flexibles Element (20) umfasst, das ein erstes bewegliches Ende (20a) mit dem Steuerorgan (16) und ein zweites bewegliches Ende (20b) mit dem Verriegelungsorgan (43) verbunden hat, um das Verriegelungsorgan (43) bei der Aktivierung des Steuerorgans (16) in seine Entriegelungsposition zu bringen, wobei das überzogene flexible Element (20) ein Kabel (200) umfasst, das gleitend in einer Hülle (21) montiert ist, die mit der Basis (2) zusammengebaut ist, **gekennzeichnet dadurch, dass** es eine Rolle (74) umfasst, die einen Abschnitt (20c) des Kabels (200) aufnimmt, das zwischen einem ersten Stop-Ende (22) der Hülle (21) und einem ersten Kabelkopf (24) des Kabels (200) liegt.

4. Das Haushaltsgerät zur kulinarischen Zubereitung (1) gemäß einem der Ansprüche 1 bis 3, bei dem das Verriegelungsorgan (43) zwischen einer Verriegelungsposition des Kopfes (3), der sich entweder in der ersten Position oder in der zweiten Position befindet, und einer Entriegelungsposition des Kopfes (3) beweglich ist, um die Bewegung des Kopfes (3) von der ersten Position zur zweiten Position und umgekehrt von der zweiten Position zur ersten Position zu erlauben.

5. Das Haushaltsgerät zur kulinarischen Zubereitung (1) gemäß einem der Ansprüche 1 bis 4, bei dem das Verriegelungssystem (17) ein Rückführungselement (54) des Verriegelungsorgans (43) in die Verriegelungsposition umfasst, wenn der Kopf (3) mindestens die erste Position erreicht, vorzugsweise wenn der Kopf (3) entweder die erste Position oder die zweite Position erreicht, und das Steuerorgan (16) entspannt wird.

6. Das Haushaltsgerät zur kulinarischen Zubereitung (1) gemäß einem der Ansprüche 1 bis 5, bei dem der Kopf (3) schwenkbar relativ zur Basis (2) montiert ist, um von der ersten Position zu der zweiten Position und umgekehrt zu wechseln.

7. Das Haushaltsgerät zur kulinarischen Zubereitung (1) gemäß Anspruch 6, bei dem sich der Kopf (3) vor und zurück relativ zur Basis (2) schwenkt, um von der ersten Position zu der zweiten Position und umgekehrt zu wechseln.

8. Das Haushaltsgerät zur kulinarischen Zubereitung (1) gemäß Anspruch 7, umfassend eine verschobene Front (10) auf einer der beiden seitlichen Seiten (11) des Kopfes (3), wobei das Steuerorgan (16) auf der Front (10) angeordnet ist.

9. Das Haushaltsgerät zur kulinarischen Zubereitung (1) gemäß einem der Ansprüche 1 bis 8, bei dem das Steuerorgan (16) aus einem Hebel (160) besteht, der schwenkbar auf der Basis (2) montiert ist und an das erste bewegliche Ende (20a) des überzogenen flexiblen Elements (20) befestigt ist.

10. Das Haushaltsgerät zur kulinarischen Zubereitung (1) gemäß einem der Ansprüche 1 bis 9, bei dem das Verriegelungsorgan (43) aus einer Verriegelungsstange (45, 45') besteht, die durch einen Hebel (44, 44') bewegt wird, der schwenkbar in der Basis (2) montiert ist, wobei der Hebel (44, 44') an das zweite bewegliche Ende (20b) des überzogenen flexiblen Elements (20) befestigt ist, der Hebel (44, 44') die Verriegelungsstange (45, 45') von der Verriegelungsposition des Kopfes (3) zur Entriegelungsposition des Kopfes (3) bei der Aktivierung des Steuerorgans (16) betätigt.

11. Das Haushaltsgerät zur kulinarischen Zubereitung (1) gemäß Anspruch 10, bei dem die Verriegelungsstange (45) eine Längsachse (X3) aufweist und drehbar bezüglich der Basis (2) entlang dieser Achse (X3) montiert ist, wobei der Hebel (44) an der Verriegelungsstange (45) befestigt ist und entlang der genannten Achse (X3) schwenkt, wenn eine Zugkraft durch das zweite bewegliche Ende (20b) des überzogenen flexiblen Elements (20) ausgeübt wird.

12. Das Haushaltsgerät zur kulinarischen Zubereitung (1) gemäß Anspruch 11, bei dem die Verriegelungsstange (45) mindestens einen Abschnitt (59, 60) aufweist, der mit zwei gegenüberliegenden flachen Flächen (59a, 59b, 60a, 60b) versehen ist, die eine Reduzierung der Dicke an dem genannten mindestens einen Abschnitt (59, 60) bewirken, um ein flaches Schloss (61, 62) mit der Dicke E1 und der Länge L1 zu bilden, wobei der Kopf (3) mindestens eine Öffnung (57, 58) mit einer Breite L2 umfasst, die größer als die Dicke E1 und kleiner als die Länge L1 ist, wobei mindestens eines der beiden Enden der Öffnung (57, 58) in einem ersten oder einer zweiten Öffnung endet, in die der genannte mindestens eine Abschnitt (59, 60) der Verriegelungsstange (45) eingeführt wird, wenn der Kopf (3) in der ersten Position ist, wobei das Schwenken der Verriegelungsstange (45) in der Verriegelungsposition das platte Schloss (61, 62) rechtwinklig zu dem Ende der Öffnung (57, 58) positioniert, und das Schwenken der Verriegelungsstange (45) in der Entriegelungsposition das platte Schloss (61, 62) in der Verlängerung der Öffnung (57, 58) positioniert.

13. Das Haushaltsgerät zur kulinarischen Zubereitung (1) gemäß Anspruch 12, bei dem die genannte mindestens eine Öffnung (57, 58) mit ihren beiden Enden jeweils in einem ersten und einem zweiten Öffnung endet, wobei die erste Öffnung (64) den genannten mindestens einen Abschnitt (59, 60) empfängt, wenn der Kopf (3) in der ersten Position ist, und die zweite Öffnung (65) den genannten mindestens einen Abschnitt (59, 60) empfängt, wenn der Kopf (3) in der zweiten Position ist, um den Kopf (3) bezüglich der Basis (2) in der ersten Position und in der zweiten Position zu verriegeln.

14. Das Haushaltsgerät zur kulinarischen Zubereitung (1) gemäß einem der Ansprüche 12 oder 13, bei dem die Verriegelungsstange (45) zwei Abschnitte (59, 60) umfasst, die jeweils ein flaches Schloss (61, 62) bilden, wobei der Kopf (3) zwei parallele Öffnungen (57, 58) umfasst, die jeweils eines ihrer zwei Enden in einem ersten und einem zweiten Öffnung enden, wobei die ersten und zweiten Öffnungen (64, 65) jeweils die beiden Abschnitte (59, 60) in der ersten Position des Kopfes (3) und in der zweiten Position des Kopfes (3) aufnehmen.

15. Das Haushaltsgerät zur kulinarischen Zubereitung (1) gemäß einem der Ansprüche 12 bis 14 und einem der Ansprüche 6 bis 8, bei dem die genannte mindestens eine Öffnung (57, 58) kreisförmig geformt ist.

## Claims

1. A household culinary preparation appliance (1) comprising a base (2), a container (6) removably mounted on the base (2) and adapted to receive foodstuffs to be prepared, a head (3) equipped with a rotary spindle (4) adapted to receive a working tool (5), the head (3) being movable between a first position in which the rotary spindle (4) is placed above an opening (9) of the container (6) positioned on the base (2) and a second position in which the rotary spindle (4) is released from above the opening (9) of the container (6), and a locking system (17) comprising a locking member (43) movable between a locking position of the head (3) at least in the first position and an unlocking position of the head (3), allowing its movement at least from the first position to the second position, and a control member (16) movable between a relaxed position in which the locking member (43) can return to the locking position and an activated position in which the locking member is in the unlocking position, the locking system (17) comprising a sheathed flexible element (20) having a first movable end (20a) connected to the control member (16) and a second movable end (20b) connected to the locking member (43) to move the locking member (43) to its unlocking position when the control member (16) is activated, **characterized in that** it comprises at least one pulley (74) on which the sheathed flexible element (20) is mounted so as to modify the path of said sheathed flexible element (20) while multiplying the efforts transmitted from the control member (16) to the locking member (43).

2. The household culinary preparation appliance (1) according to claim 1, in which the sheathed flexible element (20) comprises a cable (200) slidably mounted in a sheath (21) assembled with the base (2).

3. A household culinary preparation appliance (1) comprising a base (2), a container (6) removably mounted on the base (2) and adapted to receive foodstuffs to be prepared, a head (3) equipped with a rotary spindle (4) adapted to receive a working tool (5), the head (3) being movable between a first position in which the rotary spindle (4) is placed above an opening (9) of the container (6) positioned on the base (2) and a second position in which the rotary spindle (4) is released from above the opening (9) of the container (6), and a locking system (17) comprising a locking member (43) movable between a locking position of the head (3) at least in the first position and an unlocking position of the head (3), allowing its movement at least from the first position to the second position, and a control member (16) movable between a relaxed position in which the locking member (43) can return to the locking position and an activated position in which the locking member is in the unlocking position, the locking system (17) comprising a sheathed flexible element (20) having a first movable end (20a) connected to the control member (16) and a second movable end (20b) connected to the locking member (43) to move the locking member (43) to its unlocking position when the control member (16) is activated, the sheathed flexible element (20) comprising a cable (200) slidably mounted in a sheath (21) assembled with the base (2), **characterized in that** it comprises a pulley (74) that receives a portion (20c) of the cable (200) located between a first stop end (22) of the sheath (21) and a first cable head (24) of the cable (200).

4. The household culinary preparation appliance (1) according to one of claims 1 to 3, in which the locking member (43) is movable between a locking position of the head (3) disposed in either the first position or the second position, and an unlocking position of the head (3) to allow the movement of the head (3) from the first position to the second position and, conversely, from the second position to the first position.

5. The household culinary preparation appliance (1) according to one of claims 1 to 4, in which the locking system (17) includes a return element (54) of the locking member (43) to the locking position when the head (3) reaches at least the first position, preferably when the head (3) reaches either the first position or the second position, and the control member (16) is released.

6. The household culinary preparation appliance (1) according to one of claims 1 to 5, in which the head (3) is mounted pivoting relative to the base (2) to move from the first position to the second position and vice versa.

7. The household culinary preparation appliance (1) according to claim 6, in which the head (3) pivots back and forth relative to the base (2) to move from the first position to the second position and vice versa.

8. The household culinary preparation appliance (1) according to claim 7, comprising an offset front (10) on one of the two lateral sides (11) of the head (3), the control member (16) being arranged on the front (10).

9. The household culinary preparation appliance (1) according to one of claims 1 to 8, in which the control member (16) is constituted by a lever (160) pivotally mounted on the base (2) and attached to the first movable end (20a) of the sheathed flexible element (20).

10. The household culinary preparation appliance (1) according to one of claims 1 to 9, in which the locking member (43) is formed by a locking rod (45, 45') moved by a lever (44, 44') pivotally mounted in the base (2), the lever (44, 44') being attached to the second movable end (20b) of the sheathed flexible element (20), the lever (44, 44') operating the locking rod (45, 45') from the locking position of the head (3) to the unlocking position of the head (3) upon activation of the control member (16).

11. The household culinary preparation appliance (1) according to claim 10, in which the locking rod (45) comprises a longitudinal axis (X3) and is rotatably mounted with respect to the base (2) along this axis (X3), the lever (44) being attached to the locking rod (45) and pivoting along said axis (X3) when a traction is exerted by the second movable end (20b) of the sheathed flexible element (20).

12. The household culinary preparation appliance (1) according to claim 11, in which the locking rod (45) comprises at least one section (59, 60) provided with two opposing flat surfaces (59a, 59b, 60a, 60b) implementing a thickness reduction on said at least one section (59, 60) so as to form a flat lock (61, 62) of thickness E1 and length L1, the head (3) comprising at least one aperture (57, 58) of width L2 greater than thickness E1 and less than length L1, at least one of the two ends of the aperture (57, 58) ending in a first opening (64) or a second opening (65) in which said at least one section (59, 60) of the locking rod (45) is lodged when the head (3) is in the first position, the pivoting of the locking rod (45) in the locking position allowing the flat lock (61, 62) to be positioned at right angles to the end of the aperture (57, 58), and the pivoting of the locking rod (45) in the unlocking position allowing the flat lock (61, 62) to be positioned in the continuation of the aperture (57, 58).

13. The household culinary preparation appliance (1) according to claim 12, in which said at least one aperture (57, 58) has its two ends respectively ending in the first opening (64) and the second opening (65), the first opening (64) receiving said at least one section (59, 60) when the head (3) is in the first position and the second opening (65) receiving said at least one section (59, 60) when the head (3) is in the second position, so as to lock the head (3) with respect to the base (2) in the first position and in the second position.

14. The household culinary preparation appliance (1) according to one of claims 12 or 13, in which the locking rod (45) comprises two sections (59, 60) each forming a flat lock (61, 62), the head (3) comprising two parallel apertures (57, 58) each having one of their two ends respectively ending in the first opening (64) and the second opening (65), the first openings (64) and the second openings (65) respectively receiving the two sections (59, 60) in the first position of the head (3) and in the second position of the head (3).

15. The household culinary preparation appliance (1) according to one of claims 12 to 14 and one of claims 6 to 8, in which said at least one aperture (57, 58) is circular in shape.
